# EUROPÄISCHE PATENTSCHRIFT

(11) **EP 3 586 041 B1**
(45) Veröffentlichungstag und Bekanntmachung des Hinweises auf die Patenterteilung: **07.04.2021**
(21) Anmeldenummer: 18707846.4
(22) Anmeldetag: 12.02.2018
(51) Int. Cl.: F16H 57/02, F16H 57/021, F16H 57/031

(54) **ANTRIEB, UMFASSEND EINEN ELEKTROMOTOR UND EIN GETRIEBE, UND VERFAHREN ZUM HERSTELLEN EINES ANTRIEBS**
DRIVE, COMPRISING AN ELECTRIC MOTOR AND A TRANSMISSION, AND METHOD FOR PRODUCING A DRIVE
ENTRAÎNEMENT COMPORTANT UN MOTEUR ÉLECTRIQUE ET UNE TRANSMISSION ET PROCÉDÉ DE FABRICATION D'UN ENTRAÎNEMENT

(30) Priorität: 21.02.2017 DE 102017001646
(43) Veröffentlichungstag der Anmeldung: 01.01.2020
(73) Patentinhaber: SEW-EURODRIVE GmbH & Co. KG, 76646 Bruchsal (DE)
(72) Erfinder: DENEFLEH, Roland, 64683 Elnhausen (DE); BÜHN, Oliver, 76703 Kraichtal (DE); UNTERBURG, Henning, 76227 Karlsruhe (DE); KERSCHBAUM, Martin, 76139 Karlsruhe (DE)
(86) Internationale Anmeldenummer: PCT/EP2018/025036
(87) Internationale Veröffentlichungsnummer: WO 2018/153548

(56) Entgegenhaltungen:
- DE-A1- 10 319 187
- DE-B3-102015 009 091
- US-A1- 2013 169 092
- US-A1- 2015 349 606

## Beschreibung

Die Erfindung betrifft einen Antrieb, umfassend ein Elektromotor und ein Getriebe, und ein Verfahren zum Herstellen eines Antriebs.

Es ist allgemein bekannt, dass ein elektromotorischer Antrieb einen Elektromotor und ein Getriebe aufweist.

**Aus der** DE 20 2006 014 231 **ist ein elektromotorisches Küchengerät mit einem Bajonettverschluss für einen Elektromotor und eine Getriebestufe bekannt.**

**Aus der** US 2015 0 349 606 A1 **ist ein Elektrogerät bekannt.**

**Aus der** DE 10 2012 007 958 A1 **ist ein Elektrowerkzeug mit Vorsatzgetriebe bekannt.**

**Aus der** DE 10 2005 030 217 A1 **ist ein Elektromotor und eine Getriebe-Antriebseinheit für Stellantriebe im Kraftfahrzeug bekannt.**

**Aus der** DE 10 2011 054 958 A1 **ist ein Gehäuse eines Stellantriebs zur Aufnahme eines Elektromotors bekannt.**

**Aus der** CN 1 02 280 963 A **ist ein Elektroantrieb bekannt.**

**Aus der** DE 10 2012 202 049 A1 **ist eine elektrische Maschine bekannt.**

**Aus der** DE 10 2009 044 589 A1 **ist ein Verfahren zum Verbessern der Gefügequalität von Lagerstühlen in einem Zylinderblock bekannt.**

**Aus der** US 2015/349606 A1 **ist als nächstliegender Stand der Technik einen Getriebemotor bekannt.**

**Aus der** US 2013/169 092 A1 **ist eine Halterung für ein Lager bekannt.**

**Aus der** DE 103 19 187 A1 **ist eine elektrische Maschine mit Bajonettverbindung bekannt.**

**Aus der** DE 10 2015 009 091 B3 **ist eine Anordnung zur Leistungs- und Signalübertragung bei einer aus wenigstens zwei Einheiten bestehenden Antriebseinrichtung bekannt.**

Der Erfindung liegt daher die Aufgabe zugrunde, einen Antrieb vereinfacht herstellbar weiterzubilden.

Erfindungsgemäß wird die Aufgabe bei dem Antrieb nach den in Anspruch 1 und bei dem Verfahren nach den in Anspruch 13 angegebenen Merkmalen gelöst.

Von Vorteil ist dabei, dass die Halterippe eine Lageraufnahme stabilisiert und sich hierzu radial von der Lageraufnahme weg zum Randbereich des Gehäuseteils erstreckt. Hierdurch ist eine Stabilisierung der Lageraufnahme erreichbar und außerdem eine Begrenzung des Beweglichkeitsbereichs der Bajonettnase. Somit ist auch ein kompakter Aufbau erreichbar, da die Bajonettnase den Bajonettführungsbereich hintergreift und auf diese Weise formschlüssig geführt wird.

Bei einer vorteilhaften Ausgestaltung berührt der Bajonettführungsbereich die weitere Halterippe,
wobei der Bajonettführungsbereich, die weitere Halterippe und die Lageraufnahme einstückig, insbesondere einteilig, ausgebildet, insbesondere ausgeformt, sind. Von Vorteil ist dabei, dass die weitere Halterippe und der Bajonettführungsberiech am Gehäuseteil einstückig ausformbar sind, also einteilig herstellbar sind.

Bei einer vorteilhaften Ausgestaltung weist das Gehäuse des Getriebes ein Gehäuseteil und ein Deckelteil auf, insbesondere welche miteinander verbunden sind,
wobei eine Welle des Getriebes über Lager gelagert ist,
wobei ein erstes Lager der Lager in einer am Gehäuseteil ausgeformten Lageraufnahme aufgenommen ist,
wobei ein zweites Lager der Lager in einer am Deckelteil ausgeformten Lageraufnahme aufgenommen ist,
**wobei** zwischen jeweiliger Lageraufnahme und jeweiligem Lager ein jeweiliges Dichtelement, insbesondere Dichtelement aus Gummi oder einem Elastomer, insbesondere O-Ring, angeordnet ist, welches jeweils elastisch verformt ist, so dass das jeweilige Lager vom jeweiligen Dichtelement gegen eine jeweilige Stufe der Welle gedrückt ist,
insbesondere so dass die Lager der Welle gegeneinander verspannt sind.

Von Vorteil ist dabei, dass die Lager gegeneinander verspannt werden, also an eine jeweilige Stufe der Welle angedrückt werden. Die Andrückkraft ist die mittels der elastischen Verformung der Dichtungen erzeugte jeweilige Federkraft. Dabei ist diejenige Federkraft, welche von der elastischen Verformung der im Gehäuseteil aufgenommenen Dichtung erzeugt wird, entgegengerichtet zu derjenigen Federkraft, welche von der elastischen Verformung der im Deckelteil aufgenommenen Dichtung erzeugt wird.

Erfindungsgemäß bewirken die Dichtungen nicht nur eine Abdichtung des Innenraums des Getriebes nach außen, sondern fungieren auch als Federelement für Verspannen der Lager gegeneinander. Somit sind separate zusätzliche Spannelemente einsparbar und auf diese Weise die Herstellung vereinfacht.

Bei einer vorteilhaften Ausgestaltung begrenzen an dem Gehäuseteil ausgeformte, zum in der Lageraufnahme des Gehäuseteils aufgenommenen Lager hervorragende Stegbereiche die elastische Verformung der Dichtung,
insbesondere wobei die Stegbereiche auf jeweils demselben Radialabstand angeordnet sind und/oder in Umfangsrichtung voneinander beabstandet sind und/oder wobei die Stegbereiche an einem jeweiligen Lager anliegen. Von Vorteil ist dabei, dass die
Stegbereiche ohne zusätzlichen Aufwand herstellbar sind, da sie im Gussteil mit bloßer Formgebung erzeugt werden.

Bei einer vorteilhaften Ausgestaltung weist das **Gehäuseteil** Lageraufnahmen auf, wobei in jeder Lageraufnahme jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Gehäuseteils ebene, insbesondere zueinander in Flucht liegende, Auflageflächenbereiche ausgeformt sind,
insbesondere also die Auflageflächenbereiche in einer gemeinsamen Ebene vorgesehen sind, insbesondere angeordnet sind.

Von Vorteil ist dabei, dass das Gehäuseteil als Gussteil fertigbar ist, wobei der Rohguss aber entsprechend rau ist.

Durch Einpressen des Stempelwerkzeugs mit seinen zylindrischen Stempeln ist eine präzise Fertigung ermöglicht. Insbesondere ist die relative Positionierung der Lagersitze mit hoher Präzision herstellbar, weil die Stempel in einem Stempelwerkzeug gemeinsam angeordnet sind. Außerdem ist jeder der Lagersitze passgenau herstellbar. Damit das einpressen stabil erfolgen kann, ist auf der anderen Seite des Gehäuseteils ein stabiles Anlagen einer Arbeitsebene ermöglicht. Hierzu sind die ebenen Außenoberflächenbereiche des Gehäuseteils vorgesehen.

Somit ist eine einfache Herstellung ermöglicht.

Bei einer vorteilhaften Ausgestaltung weist das **Deckelteil** Lageraufnahmen auf, wobei in jeder Lageraufnahme jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Deckelteils ebene, insbesondere zueinander in Flucht liegende, Auflageflächenbereiche ausgeformt sind,
insbesondere also die Auflageflächenberieche in einer gemeinsamen Ebene vorgesehen sind, insbesondere angeordnet sind. Von Vorteil ist dabei, dass das Deckelteil als Gussteil fertigbar ist, wobei der Rohguss aber entsprechend rau ist.

Durch Einpressen des Stempelwerkzeugs mit seinen zylindrischen Stempeln ist eine präzise Fertigung ermöglicht. Insbesondere ist die relative Positionierung der Lagersitze mit hoher Präzision herstellbar, weil die Stempel in einem Stempelwerkzeug gemeinsam angeordnet sind. Außerdem ist jeder der Lagersitze passgenau herstellbar. Damit das Einpressen stabil erfolgen kann, ist auf der anderen Seite des Deckelteils ein stabiles Anlagen einer Arbeitsebene ermöglicht. Hierzu sind die ebenen Außenoberflächenbereiche des Deckelteils vorgesehen.

Bei einer vorteilhaften Ausgestaltung ist im jeweiligen Lagersitz ein jeweiliges Lager passgenau aufgenommen. Von Vorteil ist dabei, dass eine präzise Lagerung ermöglicht ist.

Bei einer vorteilhaften Ausgestaltung weist der Elektromotor eine Rotorwelle und ein Motorgehäuse auf, wobei die Rotorwelle mittels zumindest eines Lagers drehbar gelagert ist im Motorgehäuse,
wobei ein Adapterflansch mit dem Motorgehäuse drehfest verbunden ist
wobei das Gehäuse des Getriebes ein Gehäuseteil und ein Deckelteil aufweist, insbesondere welche miteinander verbunden sind,
wobei am Gehäuseteil ein Bajonettführungsbereich ausgebildet ist,
wobei der Adapterflansch einen Laschenbereich, insbesondere Bajonettnase, aufweist, insbesondere zum Hintergreifen des Bajonettführungsbereichs.

Von Vorteil ist dabei, dass Motor und Getriebe mittels Bajonettverbindung verbindbar sind. Somit ist ein einfaches Herstellen des Antriebs ermöglicht. Außerdem ist auch eine vereinfachte Wartung, insbesondere ein vereinfachtes Austauschen des Motors ermöglicht.

Des Weitere ist die Bajonettverbindung zur Zentrierung des Motors relativ zum Getriebe verwendbar.

Bei einer vorteilhaften Ausgestaltung sind Adapterflansch und Motorflansch einstückig, insbesondere einteilig, miteinander ausgebildet. Von Vorteil ist dabei, dass eine geringere Teilezahl notwendig ist und somit ein geringerer Lagerraum für die Herstellung benötigt wird.

Bei einer vorteilhaften Ausgestaltung ragt der Bajonettführungsbereich in eine Ausnehmung des Gehäuseteils hinein, wobei der Bajonettführungsbereich einen Radialabstandsbereich überdeckt, welcher von dem von dem Laschenbereich überdeckten Radialabstandsbereich umfasst ist, insbesondere also radial weniger ausgedehnt ist als der Laschenbereich,
wobei der vom Bajonettführungsbereich überdeckte Umfangswinkelbereich kleiner ist als der von der Ausnehmung überdeckte Umfangswinkelbereich,
wobei der von dem Laschenbereich überdeckte Umfangswinkelbereich betragsmäßig kleiner ist als die Differenz des von der Ausnehmung überdeckten Umfangswinkelbereichs und dem von dem Bajonettführungsbereich überdeckten Umfangswinkelbereich,
insbesondere so dass der Laschenbereich axial in die Ausnehmung einführbar ist und durch Verdrehen den Bajonettführungsberiech hintergreift. Von Vorteil ist dabei, dass der am Adapterflansch ausgeformte Laschenbereich axial einführbar ist in die Ausnehmung, wobei der vom Laschenbereich überdeckte Radialabstandsbereich den vom Bajonettführungsbereich überdeckten Radialabstandsbereich umfasst. Nur weil in dem vom Bajonettführungsbereich überdeckten Radialabstandsbereich der Bajonettführungsbereich in Umfangsrichtung weniger ausgedehnt ist als die Ausnehmung ist der Laschenbereich in die Ausnehmung einführbar und kann somit mit seinem Hinterschnittsbereich den Bajonettführungsabschnitt hintergreifen, wenn der Laschenbereich in Umfangsrichtung gedreht wird. Somit umgreift der Laschenabschnitt den Bajonettführungsbereich, wobei er derart eng anliegt, dass er vom Bajonettführungsberiech beim Drehen in Umfangsrichtung axial verschoben wird. Dies wird mit einer entsprechenden Kontur des Bajonettführungsbereichs bewirkt.

Bei einer vorteilhaften Ausgestaltung nimmt die axiale Breite des Bajonettführungsbereichs in Umfangsrichtung zu,
insbesondere
- so, dass der am Adapterflansch ausgebildete Laschenbereich bei der Drehung in Umfangsrichtung vom Bajonettführungsberiech axial verschoben wird, insbesondere so, dass die axiale Position proportional zur Drehwinkelstellung des Laschenbereichs ist,
- und/oder so, dass der Adapterflansch beim zum Gehäuseteil relativen Verdrehen des Adapterflansches in Umfangsrichtung zum Gehäuseteil hingedrückt wird.

Von Vorteil ist dabei, dass mittels der zunehmenden Breite ein verbessertes, also engeres, Anliegen des Laschenbereichs am Bajonettführungsabschnitt erreichbar ist und somit eine Führung, insbesondere Verschiebung des Laschenbereichs in axialer Richtung, bewirkt ist. Bei einer vorteilhaften Ausgestaltung ist die Ausnehmung in Umfangsrichtung begrenzt durch eine Halterippe, welche sich von einer Lageraufnahme des Lagers der eintreibenden Welle in radialer Richtung erstreckt.

Bei einer vorteilhaften Ausgestaltung ist die Ausnehmung entgegen der Umfangsrichtung begrenzt durch eine weitere Halterippe, welche sich von einer Lageraufnahme des Lagers der eintreibenden Welle in radialer Richtung erstreckt,
insbesondere wobei der Bajonettführungsberiech die weitere Halterippe berührt, wobei Bajonettführungsbereich, weitere Halterippe und Lageraufnahme einstückig, insbesondere einteilig, ausgebildet, insbesondere ausgeformt, sind. Von Vorteil ist dabei, dass eine stabile Halterung der Lageraufnahme erreichbar ist. Somit ist die Lageraufnahme selbst sehr dünnwandig, insbesondere ringartig oder hohlzylindrisch, ausführbar. Die Halterippen erstrecken sich zu einem radial weiter außenliegenden Bereich des Gehäuseteils, so dass dieser radial weiter außenliegende Beriech rahmenartig ausgeführt ist und somit die Stabilität verbesserte ist. Der rahmenartige Bereich muss nicht rein rechteckförmig ausgeformt sein, sondern darf auch teilweise mit Material gefüllt sein, so dass die Stabilität weiter verbessert ist.

Bei einer vorteilhaften Ausgestaltung ist am Boden der topfförmig ausgeformten Lageraufnahme zwischen Lageraufnahme und dem darin aufgenommenen Lager eine elastisch verformte Dichtung angeordnet,
wobei am Boden der Lageraufnahme Stegbereiche axial hervorragen, an welchen das Lager anliegt, so dass die Verformung der Dichtung mittels der Stegbereiche begrenzt ist,
wobei die elastisch verformte Dichtung das Lager gegen eine an der eintreibenden Welle ausgeformte Stufe drückt,
insbesondere wobei die eintreibende Welle mittels des Lagers relativ zur Lageraufnahme drehbar gelagert ist. Von Vorteil ist dabei, dass die Dichtung einerseits das Lager gegen eine Stufe der Welle drückt und andererseits als Dichtung verwendbar ist. Dabei ist wichtig, dass das Andrücken mittels der Stegbereiche begrenzt ist und somit keine übergroßen Anpresskräfte erzeugbar sind.

Bei einer vorteilhaften Ausgestaltung weist das Deckelteil ebenfalls topfförmig ausgeformte Lageraufnahmen auf,
wobei Halterippen von der jeweiligen Lageraufnahme zu einem umlaufenden Randbereich des Deckelteils sich erstrecken,
wobei am jeweiligen Boden der topfförmigen Lageraufnahme axial hervorragende Stegbereiche ausgeformt sind, welche die elastische Verformung einer jeweiligen Dichtung begrenzen,
insbesondere wobei die jeweilige Dichtung das jeweilige Lager auf eine jeweilige an der jeweiligen Welle ausgebildete Stufe drückt. Von Vorteil ist dabei, dass die Dichtung einerseits abdichtet und andererseits das Lager axial sichert und andrückt gegen eine Stufe der vom Lager gelagerten Welle.

Bei einer vorteilhaften Ausgestaltung ist in einer Ausnehmung des Gehäuseteils ein am Gehäuseteil abgestützter Bolzen angeordnet, welcher von einem Federelement insbesondere axial zum Adapterflansch gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung ist in einer Ausnehmung des Adapterflansches ein am Adapterflansch abgestützter Bolzen angeordnet, welcher von einem Federelement insbesondere axial zum Gehäuseteil gedrückt wird, insbesondere zur Arretierung. Von Vorteil ist dabei, dass eine Arretierung der Bajonettverbindung in einfacher Weise erreichbar ist. Somit ist ein einfaches Verbinden mittels Bajonettverbindung ermöglicht und ein selbsttätiges Lösen der Bajonettverbindung verhindert.

Bei einer vorteilhaften Ausgestaltung sind zum Gehäuseteil hin axial hervorragende Stegbereiche am Adapterflansch ausgeformt, welche jeweils in eine jeweilige Ringnut des Gehäuseteils hineinragen und somit als Führung bei der Verdrehbewegung des Adapterflansches relativ zum Gehäuseteil wirksam sind, wobei der vom jeweiligen Stegbereich überdeckte Radialabstandsbereich unabhängig vom Umfangswinkel ist,
insbesondere wobei der jeweilige Stegbereich sich in Umfangsrichtung erstreckt,
insbesondere wobei die Stegberieche zwar auf demselben Radialabstand angeordnet sind, aber voneinander in Umfangsrichtung beabstandet sind. Von Vorteil ist dabei, dass eine einfache Herstellung einer Zentrierung und Führung erreichbar ist. Insbesondere ist eine Ringnut verwendbar, in welche die Stegbereiche hineinragen und somit als Führung fungieren. Von Vorteil ist dabei, dass eine Führung und Zentrierung mittels der Stegbereiche in einfacher Weise erreichbar ist. Denn die Stegbereiche sind kreisabschnittweise am Adapterflansch ausgeformt und ragen teilweise in eine am Gehäuseteil ausgebildete Ringnut hinein, so dass eine Führung beim Betätigen der Bajonettverbindung bewirkt ist, also beim Verdrehen des Adapterflansches relativ zum Gehäuseteil.

Wichtige Merkmale bei dem Verfahren zum Herstellen eines Antriebs sind, dass in einem ersten Verfahrensschritt das Gehäuseteil durch Gießen hergestellt wird,
in einem zweiten Verfahrensschritt ein Stempelwerkzeug in Lageraufnahmen des Gehäuseteils eingepresst wird, so dass Lagersitze passgenau hergestellt werden, insbesondere wobei das Stempelwerkzeug mindestens zwei Stempel aufweist, wobei jeder der Stempel zur Ausformung eines jeweiligen Lagersitzes vorgesehen ist,
insbesondere wobei in einem dritten Verfahrensschritt im jeweiligen Lagersitz jeweils ein Lager aufgenommen wird.

Von Vorteil ist dabei, dass eine einfache Herstellung durch Gießen verwendbar ist und durch Einpressen des Stempelwerkzeugs die Lagersitze hochpräzise anordenbar und fertigbar sind.

Bei einer vorteilhaften Ausgestaltung wird in einem ersten Herstellverfahrensschritt das Deckelteil durch Gießen hergestellt, in einem zweiten Herstellverfahrensschritt ein Stempelwerkzeug in Lageraufnahmen des Deckelteils eingepresst wird, so dass Lagersitze passgenau hergestellt werden, insbesondere
wobei das Stempelwerkzeug mindestens zwei Stempel aufweist, wobei jeder der Stempel zur Ausformung eines jeweiligen Lagersitzes vorgesehen ist,
insbesondere wobei in einem dritten Herstellverfahrensschritt im jeweiligen Lagersitz jeweils ein Lager aufgenommen wird. Von Vorteil ist dabei, dass das Deckelteil ebenso wie das Gehäuseteil mit präzise gefertigten Lagersitzen ausstattbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

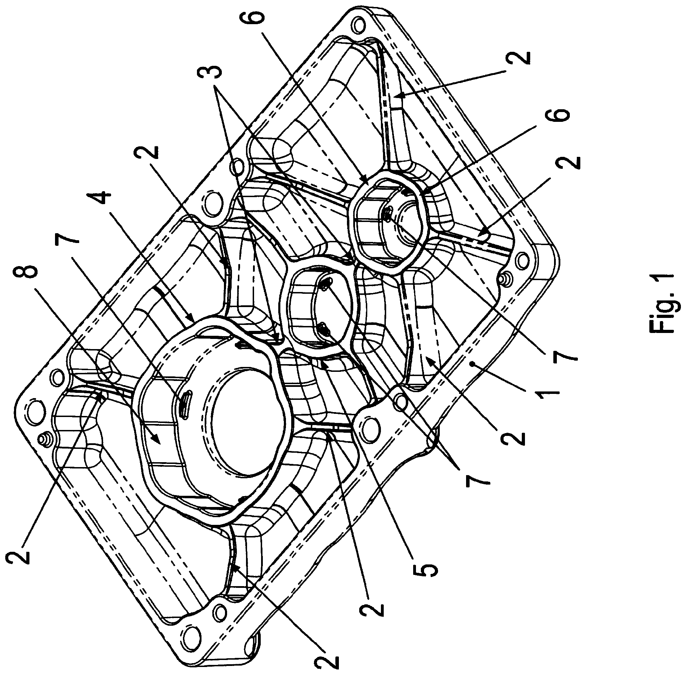

In der Figur 1 ist eine Schrägansicht eines Deckelteils 1 des erfindungsgemäßen Antriebs aus einer ersten Blickrichtung dargestellt.

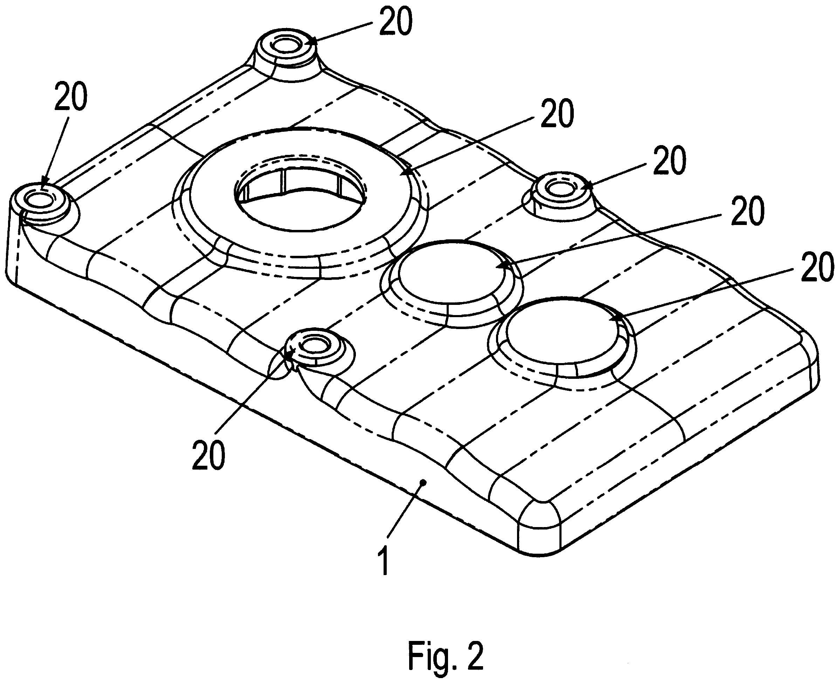

In der Figur 2 ist eine Schrägansicht des Deckelteils 1 aus einer anderen Blickrichtung dargestellt.
In der Figur 3 ist eine Seitenansicht des Deckelteils 1 dargestellt.

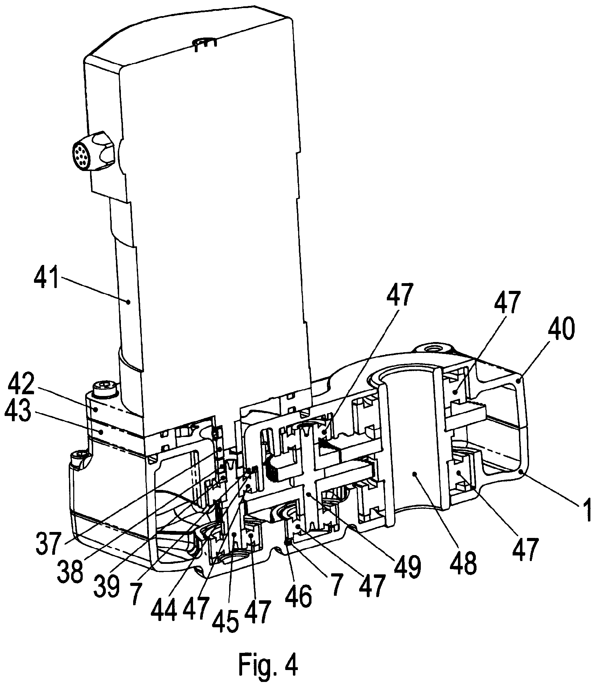

In der Figur 4 ist der Antrieb angeschnitten in Schrägansicht dargestellt.

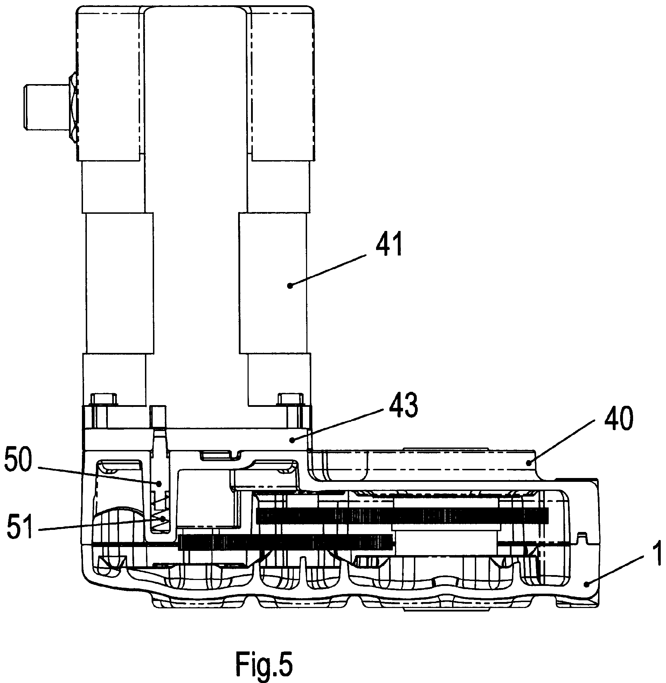

In der Figur 5 ist eine Schnittansicht des Antriebs dargestellt, wobei ein Bolzen 50 zur Arretierung sichtbar ist.
In der Figur 6 ist eine Schrägansicht eines Gehäuseteils 40 des Antriebs in Schrägansicht dargestellt.

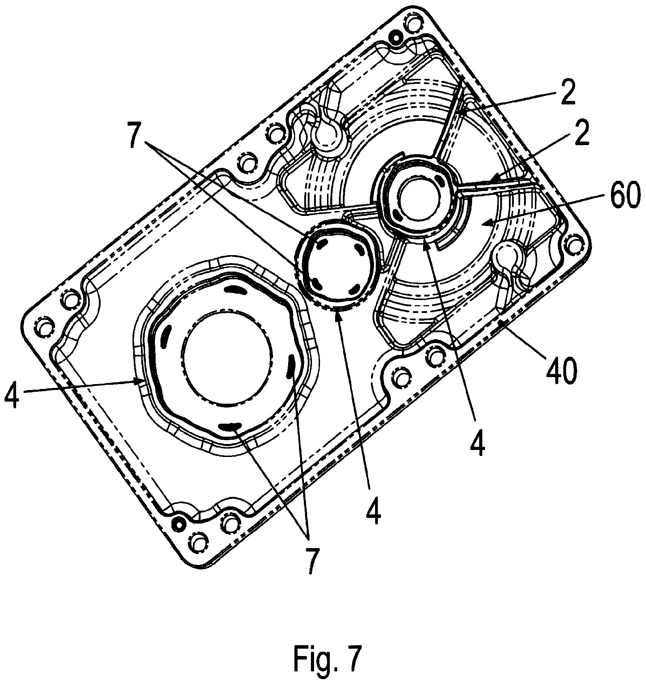

In der Figur 7 ist das Gehäuseteil 40 in einer Schrägansicht in einer anderen Blickrichtung gezeigt.
In der Figur 8 ist der Antrieb, aufweisend Getriebe und Elektromotor, in Schrägansicht gezeigt.

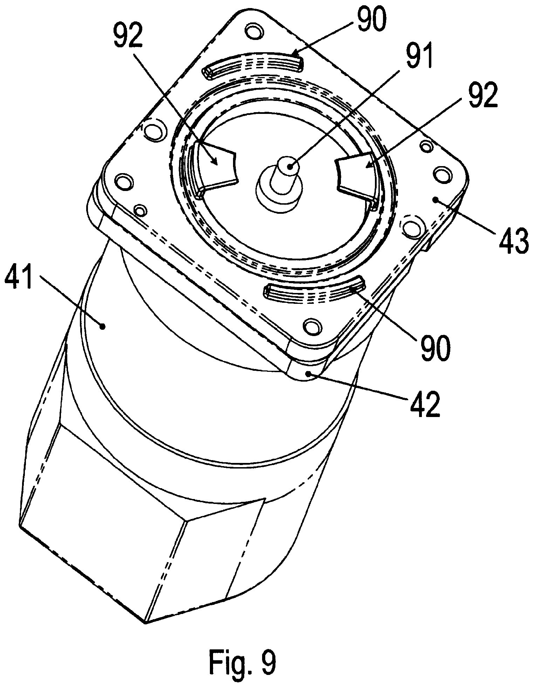

In der Figur 9 ist der Elektromotor des Antriebs in Schrägansicht dargestellt.

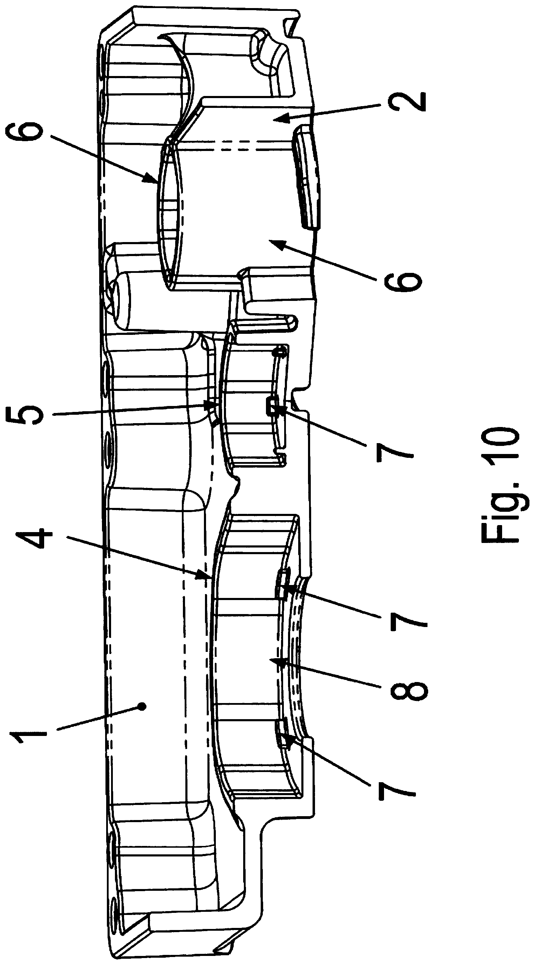

In der Figur 10 ist das Deckelteil 1 angeschnitten und in Schrägansicht dargestellt, wobei die Blickrichtung beinahe der Blickrichtung einer Seitenansicht entspricht.

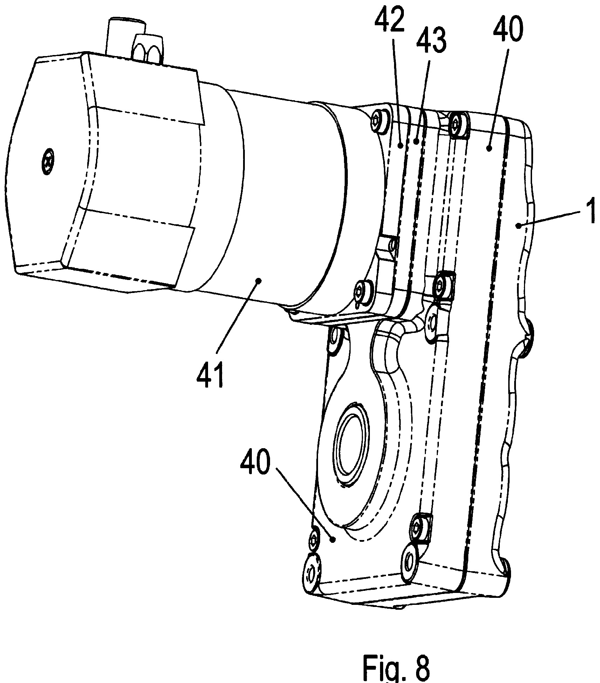

Wie in den Figuren, insbesondere in Figur 8, dargestellt, weist der Antrieb ein von einem Elektromotor angetriebenes Getriebe auf.

Wie in den Figuren dargestellt, weist dabei der Elektromotor ein Gehäuseteil 41 auf, welches mit einem Motorflansch 42 verbunden ist, welches mit dem Adapterflansch 43 verbunden ist. Das Gehäuse des Getriebes weist ein Gehäuseteil 40 auf und ein mit dem Gehäuseteil 40 dicht verbundenes Deckelteil 1.

Der Adapterflansch 43 ist mit dem Gehäuseteil 40 verbunden, wobei hier eine Bajonettverbindung verwendet ist.

Im Motorgehäuse 41 ist der Stator des Elektromotors aufgenommen und Lager zur Lagerung einer Rotorwelle des Elektromotors. Die Rotorwelle ist mittels einer Kupplung mit der eintreibenden Welle 45 des Getriebes drehfest verbunden. Hierzu weist die Kupplung ein erstes Kupplungsteil 37 auf, welches Drehfest mit der Rotorwelle verbunden ist, ein Zwischenteil 38, welches vorzugsweise aus einem Kunststoff oder Elastomer gefertigt ist, und ein zweites Kupplungsteil 39, welches drehfest mit der eintreibenden Welle 45 verbunden ist.

Erstes Kupplungsteil 37 und zweites Kupplungsteil 39 sind vorzugsweise jeweils aus Metall ausbildbar, wobei das Zwischenteil 38 aus einem weniger harten Material ausbildbar sind.

Die Kupplung ist vorzugsweise nach Art einer Klauenkupplung aufgebaut. Daher ist in Umfangsrichtung zwischen den beiden Kupplungsteilen (37, 39) das Zwischenteil 38 angeordnet. Somit sind Drehmomentstöße abdämpfbar.

Mit der eintreibenden Welle ist ein erstes Zahnrad drehfest verbunden, das im Eingriff steht mit einem weiteren Zahnrad, das mit einer Zwischenwelle 49 drehfest verbunden ist. Ein drittes Zahnrad ist ebenfalls mit der Zwischenwelle 49 drehfest verbunden, welches im Eingriff ist mit einem mit der abtreibenden Welle 48 drehfest verbundenen Zahnrad.

Jede Welle ist über Lager 47 drehbar gelagert, welche jeweils entweder im Deckelteil 1 oder im Gehäuseteil 40 aufgenommen sind.

Zur Aufnahme des jeweiligen Lagers 47 ist am Gehäuseteil 40 beziehungsweise am Deckelteil 1 jeweils eine Lageraufnahme (4, 5, 6) ausgeformt. Die Wandung der jeweiligen Lageraufnahme (4, 5, 6) ist dünnwandig ausgeführt und umgibt das Lager in jeweiliger Umfangsrichtung vollständig. Die Lageraufnahme (4, 5, 6) überdeckt in axialer Richtung jeweils einen axialen Beriech, welcher den vom jeweils aufgenommenen Lager 47 in axialer Richtung überdeckten axialen Bereich umfasst.

Die Lageraufnahmen (4, 5, 6) sind jeweils einstückig, insbesondere einteilig, entweder am Gehäuseteil 40 oder am Deckelteil 1 ausgeformt.

An der Innenwandung der jeweiligen Lageraufnahme (4, 5, 6) mittels eines Formwerkzeugs ist ein zylindrischer Raumbereich bereitgestellt, in welchem das jeweilige Lager 47 aufgenommen ist und anliegt. In denjenigen Umfangswinkelbereichen, in welchen der von der Lageraufnahme (4, 5, 6) umfasste Bereich radial weiter ausgedehnt ist, ist die Berührfläche zwischen Lageraufnahme (4, 5, 6) und Lager 47 unterbrochen.

Zwischen Gehäuseteil 40 und jeweils in einer am Gehäuseteil 40 ausgeformten Lageraufnahme (4, 5, 6) ist eine Dichtung angeordnet, welche das Lager 47 gegen eine an der von diesem jeweiligen Lager 47 gelagerten Welle ausgebildete Stufe drückt. Hierzu wird die Dichtung elastisch verformt, wobei diese Verformung durch jeweilige Stegbereiche 7 begrenzt wird, welche am Gehäuseteil 40 ausgeformt sind.

Die Stegbereiche 7, welche am Gehäuseteil 40 ausgeformt sind und jeweils dasselbe Lager 47 berühren, sind auf gleichem Radialabstand zur Drehachse der von diesem Lager 47 gelagerten Welle angeordnet. In Umfangsrichtung sind die Stegbereiche 7 dieses jeweiligen Lagers 47 voneinander beabstandet, insbesondere regelmäßig.

Die Lageraufnahmen (4, 5, 6) kragen aus dem restlichen Gehäuseteil 40 beziehungsweise Deckelteil 1 axial hervor.

Dieses restliche Deckelteil 1 ist wannenförmig ausgeführt und weist dabei einen Bodenbereich auf, aus dem die Lageraufnahmen (4, 5, 6) hervorragen.

Am restlichen Deckelteil 1 ist ein äußerer, umlaufender Randbereich angeordnet, der einen axialen Bereich überdeckt, welcher auch von den Lageraufnahmen (4, 5, 6) überdeckt wird. Vier, in Umfangsrichtung voneinander beabstandete Halterippen 2 erstrecken sich von diesem Randbereich bis zu der Lageraufnahme 4, welche für die Aufnahme des Lagers 47 der abtreibenden Welle 48 vorgesehen ist. Der Abstand der Halterippen 2 in Umfangsrichtung ist nicht regelmäßig. Somit sind Resonanzschwingungen reduzierbar.

Eine Verbindungsrippe 3 ist von den Halterippen 2 der Lageraufnahme 4, welche für die Aufnahme des Lagers 47 der Zwischenwelle 49 vorgesehen ist, beabstandet und erstreckt sich von der Lageraufnahme 4 zu der benachbarten Lageraufnahme 5.

Zwei weitere Halterippen 2 sind am Deckelteil 1 ausgeformt, welche sich von der Lageraufnahme 5 bis zum Randbereich des Deckelteils 1 erstrecken.

Die Lageraufnahme 6 des Lagers 47 der eintreibenden Welle 45 ist ebenfalls mittels vier Halterippen 2 stabilisiert, welche sich jeweils von der Lageraufnahme 6 zum Randberiech des Deckelteils 1 erstrecken und in Umfangsrichtung voneinander beabstandet sind.

Außerdem ist eine weitere Verbindungrippe 3 vorgesehen, welche sich von der Lageraufnahme 5 zur Lageraufnahme 6 erstreckt.

Zwischen dem jeweils aufgenommenen Lager 47 und dem Deckelteil 1, insbesondere dem Bodenbereich des Deckelteils 1, ist eine Dichtung angeordnet, welche in axialer Richtung auf das jeweilige Lager 47 drückt, so dass dieses an einer Stufe der jeweils durch das jeweilige Lager 47 gelagerten Welle angedrückt ist. Die elastische Verformung der Dichtung ist durch die am Deckelteil 1, insbesondere am Bodenbereich, ausgeformten Stegbereiche 7 begrenzt.

Somit ist das jeweilige Lager 47 mittels der jeweiligen Dichtung 46 angedrückt und abgedichtet.

Das Deckelteil 1 ist mit dem Gehäuseteil 40 schraubverbunden und mittels einer zwischengeordneten Dichtung abgedichtet, also dicht verbunden.

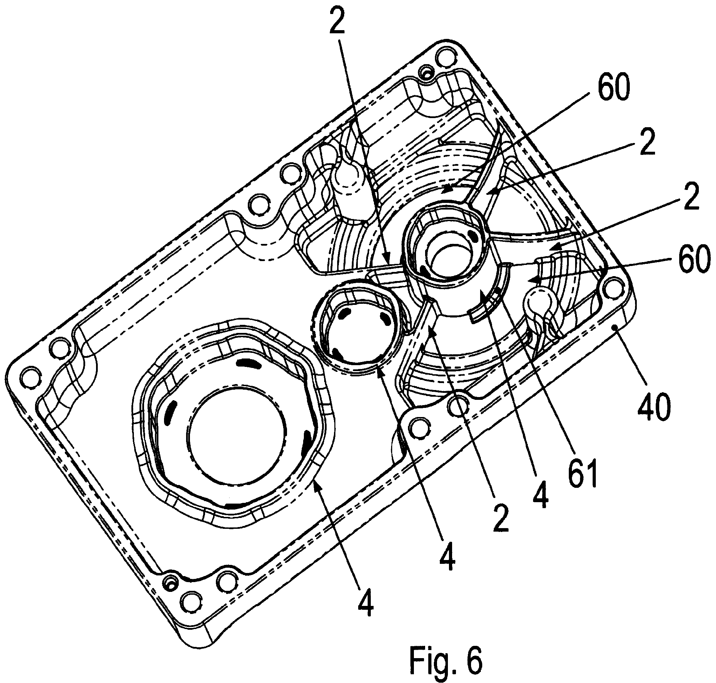

Wie in Figur 6 gezeigt, weist das Gehäuseteil 40 ebenfalls einen außen umlaufenden Randbereich auf. Für die eintreibende Welle 45 weist das Gehäuseteil 40 eine Lageraufnahme 4 auf, welche ein Lager der eintreibenden Welle 45 aufnimmt. Vier in Umfangsrichtung voneinander beabstandete Halterippen 2 erstrecken sich jeweils von dem Randbereich zur Lageraufnahme 4, insbesondere so dass diese stabilisiert ist, insbesondere gegen Schwingungen und/oder über die eintreibende Welle 45 eingeleitete Querkräfte.

Dieser Randbereich überdeckt einen axialen Beriech, welcher den vom im Gehäuseteil 40 aufgenommenen Lager der eintreibenden Welle 45 überdeckten axialen Beriech umfasst.

Der Bodenbereich des Gehäuseteils 40 weist eine erste und eine zweite Ausnehmung 60 auf, die zur Einführung von Laschenbereichen 92, insbesondere Bajonettnasen, vorgesehen sind.

In Umfangsrichtung ist die erste Ausnehmung 60 durch eine erste der Halterippen 2 begrenzt. Entgegen der Umfangsrichtung ist die zweite Ausnehmung 60 durch eine zweite der Halterippen 2 begrenzt.

Die andere Ausnehmung 60 ist durch die beiden anderen Halterippen 2 in Umfangsrichtung beziehungsweise entgegen der Umfangsrichtung begrenzt.

Von der Lagerausnehmung 4 ragt ein erster Bajonettführungsbereich 61 radial hervor, insbesondere in die Ausnehmung 60. Der erste Bajonettführungsbereich 61 erstreckt sich über einen geringeren Umfangswinkelbereich als die Ausnehmung 60 und ist radial weniger weit ausgedehnt als die Ausnehmung 60.

Von der Lagerausnehmung 4 ragt auch ein zweiter Bajonettführungsbereich 61 radial hervor, insbesondere in die andere Ausnehmung 60. Der zweite Bajonettführungsbereich 61 erstreckt sich ebenfalls über einen geringeren Umfangswinkelbereich als die zweite Ausnehmung 60 und ist radial ebenfalls weniger weit ausgedehnt als die zweite Ausnehmung 60.

Am Adapterflansch 43 ist eine mittig angeordnete Ausnehmung ausgeformt, wobei voneinander in Umfangsrichtung beabstandete Laschenbereiche 92 nach radial innen in die Ausnehmung hervorragen.

In Umfangsrichtung ist jeder der beiden Laschenbereiche 92 weniger ausgedehnt als die Differenz der Ausdehnung der Ausnehmung 60 in Umfangsrichtung und der Ausdehnung des Bajonettführungsbereichs 61.

Somit ist beim Ansetzen des Adapterflansches 43 an das Gehäuseteil 40 der jeweilige Laschenbereich 92 in den in Umfangsrichtung vorhandenen Freiraum zwischen der Begrenzung der Ausnehmung 60, also der ersten Halterippe 2, und dem Bajonettführungsbereich 61 einführbar und durch relatives Verdrehen des Adapterflansches als Hintergriff hinter den Bajonettführungsbereich 61 wirksam wird.

Der Bajonettführungsbereich weist eine in Umfangsrichtung zunehmende axiale Position auf, so dass beim relativen Verdrehen der Adapterflansch 43 immer näher oder stärker auf das Gehäuseteil 40 gedrückt wird. Die Verdrehbewegung ist begrenzt einerseits durch das Anliegen des Adapterflansches 43 an dem Gehäuseteil 40 und andererseits auch durch die zweite Halterippe 2, welche die Verdrehbewegung in Umfangsrichtung begrenzt.

Vorzugsweise nimmt die axiale Wandstärke des Bajonettführungsbereichs 61 in Umfangsrichtung zu, so dass der hintergreifende Laschenbereich 92 immer weiter in axiale Richtung verschoben wird und somit der Adapterflansch 43 an das Gehäuseteil 40 angedrückt wird.

Zur Arretierung ist ein Bolzen 50 in einem am Gehäuseteil 40 ausgeformten Sackloch geführt, welcher von einem Federelement 51, welches am Boden des Sacklochs abgestützt ist, zum Adapterflansch 43 hingedrückt wird.

Sobald bei der Verdrehbewegung eine im Adapterflansch 43 eingebrachte Ausnehmung in Flucht mit dem Sackloch des Gehäuseteils 40 kommt, wird daher der Bolzen 50 vom Federelement 51 in die Ausnehmung teilweise hineingedrückt. Somit ragt dann der axial ausgerichtete Bolzen 50 mit seinem aus dem Gehäuseteil 40 hervorragenden Bereich in die Ausnehmung des Adapterflansches 43 hinein, wodurch die Verdrehbewegung arretiert wird.

Am Adapterflansch 43 sind axial zum Gehäuseteil 40 hervorragende Stegbereiche 90 ausgeformt, welche in eine Ringnut des Gehäuseteils 40 hineinragen und somit als Führung bei der Verdrehbewegung wirksam sind. Der jeweilige Stegbereich 90 erstreckt sich in Umfangsrichtung, wobei die Stegberieche zwar auf demselben Radialabstand angeordnet sind, aber voneinander in Umfangsrichtung beabstandet.

Jede der Wellen (45, 48, 49) ist über zwei Lager gelagert, wobei jedes der Lager von einer Dichtung (44, 46) axial beaufschlagt wird, so dass die Lager gegeneinander vorgespannt sind. Hierbei ist ein erstes der Lager einer ersten Welle der Wellen (45, 48, 49) im Deckelteil 1 und das andere Lager dieser ersten Welle im Gehäuseteil 40 aufgenommen. Die erste Dichtung ist
im Deckelteil 1 aufgenommen und drückt gegen das erste Lager der ersten Welle. Die zweite Dichtung ist im Gehäuseteil 40 aufgenommen und drückt gegen das zweite Lager der ersten Welle. Somit wird das erste Lager von der ersten Dichtung gegen eine erste Stufe an der ersten Welle gedrückt und das zweite Lager von der zweiten Dichtung gegen eine zweite Stufe der ersten Welle gedrückt. Somit sind die Lager gegeneinander verspannt angeordnet. Die Dichtungen sind jeweils als O-Ring oder als Flachdichtung ausführbar.

Zur Herstellung präzise gefertigter Lagersitze für die aufgenommenen Lager aller Wellen des Getriebes wird nach dem Herstellen mittels Gießen ein Verformwerkzeug eingesetzt.

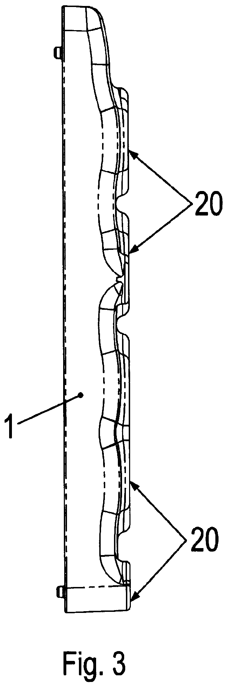

Das Deckelteil 1 wird also in einem ersten Herstellverfahrensschritt als Gussteil hergestellt. Danach wird das Deckelteil 1 mit seiner Außenseite, also mit der beim später hergestellten Antrieb vom Motor abgewandten Seite, auf eine ebene Fläche aufgelegt. Hierzu weist das Deckelteil 1, wie in Figur 3 dargestellt, plane, also ebene Auflageflächenbereiche 20 auf. Somit liegt das Deckelteil 1 stabil auf der ebenen Fläche, beispielsweise ein Arbeitstisch, auf. Danach wird als Formwerkzeug ein Stempel in jede der Lageraufnahmen eingepresst, wobei der Stempel zylindrisch geformt ist. Auf diese Weise werden die Lagersitze in den Lageraufnahmen auf Passungsmaß gebracht. Vorzugsweise werden die Stempel für die Lageraufnahmen synchron eingepresst. Somit ist die relative Lage und Ausrichtung der Lagersitze mit hoher Genauigkeit gewährleistbar. Ein Verkippen des Deckelteils 1 beim Einpressen des Stempelwerkzeugs ist somit verhindert.

Auf diese Weise sind also zylindrische Abschnitte 8 der Wandung der jeweiligen Lageraufnahme passgenau fertigbar. Allerdings sind diese Abschnitte nicht zusammenhängend gefertigt, sondern in Umfangsrichtung voneinander beabstandet. Somit wechseln die zylindrischen Abschnitte der Wandung der jeweiligen Lageraufnahme ab mit jeweils benachbarten Abschnitten, welche radial weiter ausgedehnt sind.

Das beschrieben Verfahren zur Fertigung passgenauer Lagersitze wird auch beim Gehäuseteil 40 ausgeführt. Hierzu weist dieses Gehäuseteil 40 auf der dem Motor zugewandten Seite ebene Flächenabschnitte auf, so dass es stabil auf einer ebenen Fläche auflegbar und die Stempelwerkzeuge zur passgenauen Herstellung der Lagersitze synchron in die Lageraufnahmen einpressbar sind. Ein Verkippen des Gehäuseteils 40 beim Einpressen des Stempelwerkzeugs ist somit verhindert. Somit sind die Lagersitze relativ zueinander hochgenau ausgerichtet und auch von ihrer jeweiligen Form her passgenau gefertigt.

Bei einem weiteren erfindungsgemäßen Ausführungsbeispiel sind Adapterflansch 43 und Motorflansch 42 einstückig, also einteilig, miteinander ausbildbar.

### Bezugszeichenliste

1 Deckelteil
2 Halterippe
3 Verbindungsrippe
4 Lageraufnahme
5 Lageraufnahme
6 Lageraufnahme
7 Stegbereich
8 zylindrischer Abschnitt der Wandung der Lageraufnahme 4
20 Auflageflächenbereich
37 erstes Kupplungsteil
38 Zwischenteil
39 zweites Kupplungsteil
40 Gehäuseteil
41 Motorgehäuse
42 Motorflansch
43 Adapterflansch
44 Dichtung
45 eintreibende Welle
46 Dichtung
47 Lager
48 abtreibende Welle
49 Zwischenwelle
50 Bolzen
51 Federelement
60 Ausnehmung für Bajonettnase
61 Bajonettführungsbereich
90 Stegbereich
91 Rotorwelle
92 Laschenbereich, insbesondere Bajonettnase

## Patentansprüche

1. Antrieb, umfassend einen Elektromotor und ein Getriebe,
wobei das Gehäuse des Getriebes ein Gehäuseteil (40) und ein Deckelteil (1), welche miteinander verbunden sind, aufweist, am Gehäuseteil (40) ein Bajonettführungsbereich (61) ausgebildet ist,
der Elektromotor eine Rotorwelle (91) und ein Motorgehäuse (41) aufweist, wobei die Rotorwelle (91) mittels zumindest eines Lagers drehbar gelagert ist im Motorgehäuse (41), wobei ein Adapterflansch (43) mit dem Motorgehäuse (41) drehfest verbunden ist,
**dadurch gekennzeichnet, dass**
der Adapterflansch (43) einen Laschenbereich (92), in Form einer Bajonettnase, zum Hintergreifen des Bajonettführungsbereichs (61), aufweist,
wobei der Bajonettführungsbereich (61) in eine Ausnehmung (60) des Gehäuseteils (40) hineinragt,
wobei die Ausnehmung (60) in Umfangsrichtung begrenzt ist durch eine am Gehäuseteil (40) ausgeformte Halterippe (2), welche sich von einer Lageraufnahme (4, 5, 6) des Lagers der eintreibenden Welle des Getriebes, bezogen auf die Achsrichtung der eintreibenden Welle, in radialer Richtung erstreckt,
wobei die Ausnehmung (60) entgegen der Umfangsrichtung begrenzt ist durch eine weitere am Gehäuseteil (40) ausgeformte Halterippe (2), welche sich von einer Lageraufnahme (4, 5, 6) des Lagers der eintreibenden Welle in radialer Richtung erstreckt.

2. Antrieb nach Anspruch 1,
**dadurch gekennzeichnet, dass**
der Bajonettführungsbereich (61) die weitere Halterippe (2) berührt,
wobei der Bajonettführungsbereich (61), die weitere Halterippe (2) und die Lageraufnahme (4, 5, 6) einstückig, insbesondere einteilig, ausgebildet, insbesondere ausgeformt, sind,
**und/oder dass**
der Adapterflansch (43) und der Motorflansch (42) einstückig, insbesondere einteilig, miteinander ausgebildet sind.

3. Antrieb nach mindestens einem der vorangegangenen Ansprüche,
**dadurch gekennzeichnet, dass**
der Bajonettführungsbereich (61) einen Radialabstandsbereich überdeckt, welcher von dem von dem Laschenbereich (92) überdeckten Radialabstandsbereich umfasst ist, insbesondere also radial weniger ausgedehnt ist als der Laschenbereich (92),
wobei der vom Bajonettführungsbereich (61) überdeckte Umfangswinkelbereich kleiner ist als der von der Ausnehmung (60) überdeckte Umfangswinkelbereich,
wobei der von dem Laschenbereich (92) überdeckte Umfangswinkelbereich betragsmäßig kleiner ist als die Differenz des von der Ausnehmung (60) überdeckten Umfangswinkelbereichs und dem von dem Bajonettführungsbereich (61) überdeckten Umfangswinkelbereich,
insbesondere so, dass der Laschenbereich (92) axial in die Ausnehmung (60) einführbar ist und durch Verdrehen den Bajonettführungsberiech hintergreift.

4. Antrieb nach mindestens einem der vorangegangenen Ansprüche,
**dadurch gekennzeichnet, dass**
die axiale Breite des Bajonettführungsbereichs (61) in Umfangsrichtung zunimmt, insbesondere
- so, dass der am Adapterflansch (43) ausgebildete Laschenbereich (92) bei der Drehung in Umfangsrichtung vom Bajonettführungsberiech axial verschoben wird, insbesondere so, dass die axiale Position proportional zur Drehwinkelstellung des Laschenbereichs (92) ist,
- und/oder so, dass der Adapterflansch (43) beim zum Gehäuseteil (40) relativen Verdrehen des Adapterflansches (43) in Umfangsrichtung zum Gehäuseteil (40) hingedrückt wird.

5. Antrieb nach mindestens einem der vorangegangenen Ansprüche,
**dadurch gekennzeichnet, dass**
in einer Ausnehmung (60) des Gehäuseteils (40) ein am Gehäuseteil (40) abgestützter Bolzen (50) angeordnet ist, welcher von einem Federelement (51) insbesondere axial zum Adapterflansch (43) gedrückt wird, insbesondere zur Arretierung,
oder dass
in einer Ausnehmung (60) des Adapterflansches (43) ein am Adapterflansch (43) abgestützter Bolzen (50) angeordnet ist, welcher von einem Federelement (51) insbesondere axial zum Gehäuseteil (40) gedrückt wird, insbesondere zur Arretierung.

6. Antrieb nach mindestens einem der vorangegangenen Ansprüche,
**dadurch gekennzeichnet, dass**
zum Gehäuseteil (40) hin axial hervorragende Stegbereiche (7, 90) am Adapterflansch (43) ausgeformt sind, welche jeweils in eine jeweilige Ringnut des Gehäuseteils (40) hineinragen und somit als Führung bei der Verdrehbewegung des Adapterflansches (43) relativ zum Gehäuseteil (40) wirksam sind,
wobei der vom jeweiligen Stegbereich (7, 90) überdeckte Radialabstandsbereich unabhängig vom Umfangswinkel ist,
insbesondere wobei der jeweilige Stegbereich (7, 90) sich in Umfangsrichtung erstreckt,
insbesondere wobei die Stegberieche zwar auf demselben Radialabstand angeordnet sind, aber voneinander in Umfangsrichtung beabstandet sind.

7. Antrieb nach mindestens einem der vorangegangenen Ansprüche,
**dadurch gekennzeichnet, dass**
eine Welle, insbesondere die eintreibende Welle, des Getriebes über das Lager (47) als erstes Lager (47) und über ein zweites Lager (47) gelagert ist,
wobei das erste Lager (47) in einer am Gehäuseteil (40) ausgeformten Lageraufnahme (4, 5, 6) aufgenommen ist,
wobei das zweite Lager (47) in einer am Deckelteil (1) ausgeformten Lageraufnahme (4, 5, 6) aufgenommen ist.

8. Antrieb nach mindestens einem der vorangegangenen Ansprüche,
**dadurch gekennzeichnet, dass**
zwischen jeweiliger Lageraufnahme (4, 5, 6) und jeweiligem Lager (47) ein jeweiliges Dichtelement, insbesondere Dichtelement aus Gummi oder einem Elastomer, insbesondere O-Ring, angeordnet ist, welches jeweils elastisch verformt ist, so dass das jeweilige Lager (47) vom jeweiligen Dichtelement gegen eine jeweilige Stufe der Welle gedrückt ist,
insbesondere so, dass die Lager (47) der Welle gegeneinander verspannt sind.

9. Antrieb nach mindestens einem der vorangegangenen Ansprüche,
**dadurch gekennzeichnet, dass**
an dem Gehäuseteil (40) ausgeformte, zum in der Lageraufnahme (4, 5, 6) des Gehäuseteils (40) aufgenommenen Lager (47) hervorragende Stegbereiche (7, 90) die elastische Verformung der Dichtung (44, 46) begrenzen,
insbesondere wobei die Stegbereiche (7, 90) auf jeweils demselben Radialabstand angeordnet sind und/oder in Umfangsrichtung voneinander beabstandet sind und/oder wobei die Stegbereiche (7, 90) an einem jeweiligen Lager anliegen,
**und/oder dass**
am Boden der topfförmig ausgeformten Lageraufnahme (4, 5, 6) zwischen Lageraufnahme (4, 5, 6) und dem darin aufgenommenen Lager (47) die elastisch verformte Dichtung (44, 46) angeordnet ist,
wobei am Boden der Lageraufnahme (4, 5, 6) Stegbereiche (7, 90) oder die Stegbereiche (7, 90) axial hervorragen, an welchen das Lager (47) anliegt, so dass die Verformung der Dichtung (44, 46) mittels der Stegbereiche (7, 90) begrenzt ist,
wobei die elastisch verformte Dichtung (44, 46) das Lager (47) gegen eine an der Welle ausgeformte Stufe drückt,
insbesondere wobei die Welle mittels des Lagers relativ zur Lageraufnahme (4, 5, 6) drehbar gelagert ist.

10. Antrieb nach mindestens einem der vorangegangenen Ansprüche,
**dadurch gekennzeichnet, dass**
am Deckelteil (1) ebenfalls topfförmig ausgeformte Lageraufnahmen (4, 5, 6) ausgeformt sind,
wobei Halterippen (2) von der jeweiligen Lageraufnahme (4, 5, 6) zu einem umlaufenden Randbereich des Deckelteils (1) sich erstrecken,
wobei am jeweiligen Boden der topfförmigen Lageraufnahme (4, 5, 6) axial hervorragende Stegbereiche (7, 90) ausgeformt sind, welche die elastische Verformung einer jeweiligen Dichtung (44, 46) begrenzen,
insbesondere wobei die jeweilige Dichtung (44, 46) das jeweilige Lager (47) auf eine jeweilige an der jeweiligen Welle ausgebildete Stufe drückt.

11. Antrieb nach mindestens einem der vorangegangenen Ansprüche,
**dadurch gekennzeichnet, dass**
das Gehäuseteil (40) die Lageraufnahmen (4, 5, 6) aufweist, wobei in jeder Lageraufnahme (4, 5, 6) jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Gehäuseteils (40) ebene, insbesondere zueinander in Flucht liegende, Auflageflächenbereiche (20) ausgeformt sind,
insbesondere also die Auflageflächenbereiche (20) in einer gemeinsamen Ebene vorgesehen sind, insbesondere angeordnet sind.

12. Antrieb nach mindestens einem der vorangegangenen Ansprüche,
**dadurch gekennzeichnet, dass**
das **Deckelteil (1)** Lageraufnahmen (4, 5, 6) aufweist, wobei in jeder Lageraufnahme (4, 5, 6) jeweils ein Lagersitz vorgesehen ist,
insbesondere wobei der jeweilige Lagersitz in Umfangsrichtung unterbrochen ausgeführt ist,
wobei an der vom Lagersitz abgewandten Seite, insbesondere Außenseite, des Deckelteils (1) ebene, insbesondere zueinander in Flucht liegende, Auflageflächenbereiche (20) ausgeformt sind,
insbesondere also die Auflageflächenberieche in einer gemeinsamen Ebene vorgesehen sind, insbesondere angeordnet sind
**und/oder dass**
im jeweiligen Lagersitz ein jeweiliges Lager (47) passgenau aufgenommen ist.

13. Verfahren zum Herstellen eines Antriebs nach mindestens einem der vorangegangenen Ansprüche,
**dadurch gekennzeichnet, dass**
in einem ersten Verfahrensschritt das Gehäuseteil (40) durch Gießen hergestellt wird,
in einem zweiten Verfahrensschritt ein Stempelwerkzeug in Lageraufnahmen (4, 5, 6) des Gehäuseteils (40) eingepresst wird, so dass Lagersitze passgenau hergestellt werden,
wobei das Stempelwerkzeug mindestens zwei Stempel aufweist, wobei jeder der Stempel zur Ausformung eines jeweiligen Lagersitzes vorgesehen ist,
wobei in einem dritten Verfahrensschritt im jeweiligen Lagersitz jeweils ein Lager (47) aufgenommen wird.

14. Verfahren nach Anspruch 13,
**dadurch gekennzeichnet, dass**
in einem ersten Herstellverfahrensschritt das Deckelteil (1) durch Gießen hergestellt wird,
in einem zweiten Herstellverfahrensschritt ein Stempelwerkzeug in Lageraufnahmen (4, 5, 6) des Deckelteils (1) eingepresst wird, so dass Lagersitze passgenau hergestellt werden, insbesondere wobei das Stempelwerkzeug mindestens zwei Stempel aufweist, wobei jeder der Stempel zur Ausformung eines jeweiligen Lagersitzes vorgesehen ist,
insbesondere wobei in einem dritten Herstellverfahrensschritt im jeweiligen Lagersitz jeweils ein Lager (47) aufgenommen wird.

## Claims

1. Drive comprising an electric motor and a gearing,
the casing of the gearing having a casing part (40) and a lid part (1), which are interconnected,
a bayonet guide region (61) being formed on the casing part (40),
the electric motor having a rotor shaft (91) and a motor casing (41), the rotor shaft (91) being rotatably mounted in the motor casing (41) by means of at least one bearing,
an adapter flange (43) being non-rotatably connected to the motor casing (41), **characterised in that**
the adapter flange (43) has a lug region (92) in the form of a bayonet lug for engaging behind the bayonet guide region (61),
the bayonet guide region (61) protruding into an opening (60) of the casing part (40),
the opening (60) being defined in the circumferential direction by a retaining rib (2), which is shaped on the casing part (40) and extends in the radial direction from a bearing receptacle (4, 5, 6) of the bearing of the input shaft of the gearing, based on the axial direction of the input shaft,
the opening (60) being defined in the opposite direction to the circumferential direction by a further retaining rib (2), which is shaped on the casing part (40) and extends in the radial direction from a bearing receptacle (4, 5, 6) of the bearing of the input shaft.

2. Drive according to claim 1,
**characterised in that**
the bayonet guide region (61) is in contact with the further retaining rib (2),
the bayonet guide region (61), the further retaining rib (2) and the bearing receptacle (4, 5, 6) being formed, in particular shaped, in one piece, in particular as one part,
and/or **in that**
the adapter flange (43) and the motor flange (42) are formed together in one piece, in particular as one part.

3. Drive according to at least one of the preceding claims,
**characterised in that**
the bayonet guide region (61) covers a radial-distance region that is encompassed by the radial-distance region covered by the lug region (92), in particular therefore has a lesser radial extent than the lug region (92),
the circumferential angular range covered by the bayonet guide region (61) being smaller than the circumferential angular range covered by the opening (60),
the circumferential angular range covered by the lug region (92) being smaller in terms of magnitude than the difference between the circumferential angular range covered by the opening (60) and the circumferential angular range covered by the bayonet guide region (61),
in particular such that the lug region (92) can be inserted axially into the opening (60) and engages behind the bayonet guide region as a result of rotation.

4. Drive according to at least one of the preceding claims,
**characterised in that**
the axial width of the bayonet guide region (61) increases in the circumferential direction, in particular
- such that the lug region (92) formed on the adapter flange (43) is axially displaced by the bayonet guide region upon rotation in the circumferential direction, in particular such that the axial position is proportional to the rotational angle position of the lug region (92),
- and/or such that the adapter flange (43) is pushed in the circumferential direction towards the casing part (40) when the adapter flange (43) is rotated relative to the casing part (40).

5. Drive according to at least one of the preceding claims,
**characterised in that**
a bolt (50) supported on the casing part (40) is arranged in an opening (60) of the casing part (40) and is pushed in particular axially towards the adapter flange (43) by a spring element (51), in particular for the purpose of locking,
or **in that**
a bolt (50) supported on the adapter flange (43) is arranged in an opening (60) of the adapter flange (43) and is pushed in particular axially towards the casing part (40) by a spring element (51), in particular for the purpose of locking.

6. Drive according to at least one of the preceding claims,
**characterised in that**
ridge regions (7, 90) protruding axially towards the casing part (40) are shaped on the adapter flange (43) and each protrude into respective annular grooves in the casing part (40) and thus act as a guide when the adapter flange (43) moves in rotation relative to the casing part (40),
the radial-distance region covered by each ridge region (7, 90) being independent of the circumferential angle,
each ridge region (7, 90) in particular extending in the circumferential direction,
the ridge regions in particular being arranged at the same radial distance but being spaced apart from one another in the circumferential direction.

7. Drive according to at least one of the preceding claims,
**characterised in that**
a shaft, in particular the input shaft, of the gearing is mounted by means of the bearing (47) as the first bearing (47), and by means of a second bearing (47),
the first bearing (47) being received in a bearing receptacle (4, 5, 6) shaped on the casing part (40),
the second bearing (47) being received in a bearing receptacle (4, 5, 6) shaped on the lid part (1).

8. Drive according to at least one of the preceding claims,
**characterised in that**
respective sealing elements, in particular a sealing element made of rubber or an elastomer, in particular an O-ring, is arranged between each bearing receptacle (4, 5, 6) and bearing (47) and are each resiliently deformed such that each bearing (47) is pushed against a respective step of the shaft by the respective sealing element,
in particular such that the bearings (47) of the shaft are braced with respect to one another.

9. Drive according to at least one of the preceding claims,
**characterised in that**
ridge regions (7, 90), shaped on the casing part (40) and protruding with respect to the bearing (47) received in the bearing receptacle (4, 5, 6) of the casing part (40), limit the resilient deformation of the seal (44, 46),
the ridge regions (7, 90) in particular being arranged at the same radial distance and/or being spaced apart from one another in the circumferential direction and/or the ridge regions (7, 90) abutting respective bearings,
and/or **in that**
the resiliently deformed seal (44, 46) is arranged at the bottom of the cup-shaped bearing receptacle (4, 5, 6) between the bearing receptacle (4, 5, 6) and the bearing (47) received therein,
ridge regions (7, 90) or the ridge regions (7, 90) projecting axially on the bottom of the bearing receptacle (4, 5, 6), the bearing (47) abutting said ridge regions such that the deformation of the seal (44, 46) is limited by means of the ridge regions (7, 90),
the resiliently deformed seal (44, 46) pushing the bearing (47) against a step shaped on the shaft,
the shaft in particular being rotatably mounted relative to the bearing receptacle (4, 5, 6) by means of the bearing.

10. Drive according to at least one of the preceding claims,
**characterised in that**
bearing receptacles (4, 5, 6) that are likewise cup-shaped are shaped on the lid part (1), retaining ribs (2) extending from each bearing receptacle (4, 5, 6) towards a circumferential edge region of the lid part (1),
axially protruding ridge regions (7, 90) being shaped on the bottom of each cup-shaped bearing receptacle (4, 5, 6) and limiting the resilient deformation of a respective seal (44, 46),
each seal (44, 46) in particular pushing the respective bearing (47) onto a respective step formed on the respective shaft.

11. Drive according to at least one of the preceding claims,
**characterised in that**
the casing part (40) has the bearing receptacles (4, 5, 6), a bearing seat being provided in each bearing receptacle (4, 5, 6),
each bearing seat in particular being discontinuous in the circumferential direction,
planar bearing-surface regions (20), which are in particular aligned with one another, being shaped on the side of the casing part (40) facing away from the bearing seat, in particular the outside,
the bearing-surface regions (20) in particular being provided, in particular arranged, in a common plane.

12. Drive according to at least one of the preceding claims,
**characterised in that**
the lid part (1) has bearing receptacles (4, 5, 6), a bearing seat being provided in each bearing receptacle (4, 5, 6),
each bearing seat in particular being discontinuous in the circumferential direction,
planar bearing-surface regions (20), which are in particular aligned with one another, being formed on the side of the lid part (1) facing away from the bearing seat, in particular the outside,
the bearing-surface regions in particular being provided, in particular arranged, in a common plane
and/or **in that**
a respective bearing (47) is received in each bearing seat with an exact fit.

13. Method for producing a drive according to at least one of the preceding claims, **characterised in that**
in a first method step, the casing part (40) is produced by casting,
in a second method step, a punch tool is pressed into bearing receptacles (4, 5, 6) of the casing part (40) such that bearing seats are produced with an exact fit, the punch tool having at least two punches, each of the punches being provided for shaping a particular bearing seat,
in a third method step, a respective bearing (47) being received in each bearing seat.

14. Method according to claim 13,
**characterised in that**
in a first production method step, the lid part (1) is produced by casting,
in a second production method step, a punch tool is pressed into bearing receptacles (4, 5, 6) of the lid part (1) such that bearing seats are produced with an exact fit, the punch tool in particular having at least two punches, each of the punches being provided for shaping a particular bearing seat,
in a third method step, a respective bearing (47) in particular being received in each bearing seat.

## Revendications

1. Entraînement, comprenant un moteur électrique et une transmission,
dans lequel le carter de la transmission présente une partie carter (40) et une partie couvercle (1) qui sont reliées entre elles,
une zone de guidage à baïonnette (61) est formée sur la partie carter (40),
le moteur électrique présente un arbre de rotor (91) et un carter de moteur (41), l'arbre de rotor (91) étant monté à rotation dans le carter de moteur (41) au moyen d'au moins un palier,
dans lequel une bride d'adaptation (43) est reliée de manière solidaire en rotation au carter de moteur (41),
**caractérisé en ce que**
la bride d'adaptation (43) présente une zone de languette (92) en forme d'ergot de baïonnette, destinée à s'engager derrière la zone de guidage à baïonnette (61),
dans lequel la zone de guidage à baïonnette (61) fait saillie dans un évidement (60) de la partie carter (40),
dans lequel l'évidement (60) est délimité dans la direction circonférentielle par une ailette de retenue (2) formée sur la partie carter (40), qui s'étend dans la direction radiale à partir d'un logement de palier (4, 5, 6) du palier de l'arbre d'entrée de la transmission, par rapport à la direction axiale de l'arbre d'entrée,
dans lequel l'évidement (60) est délimité à l'encontre de la direction circonférentielle par une autre ailette de retenue (2) formée sur la partie carter (40), qui s'étend dans la direction radiale à partir d'un logement de palier (4, 5, 6) du palier de l'arbre d'entrée.

2. Entraînement selon la revendication 1,
**caractérisé en ce que**
la zone de guidage à baïonnette (61) est en contact avec l'autre ailette de retenue (2), dans lequel la zone de guidage à baïonnette (61), l'autre ailette de retenue (2) et le logement de palier (4, 5, 6) sont réalisés, en particulier formés, d'une seule pièce, en particulier d'un seul tenant,
et/ou que
la bride d'adaptation (43) et la bride de moteur (42) sont formées ensemble d'une seule pièce, en particulier d'un seul tenant.

3. Entraînement selon au moins l'une des revendications précédentes,
**caractérisé en ce que**
la zone de guidage à baïonnette (61) couvre une zone de distance radiale qui est comprise par la zone de distance radiale couverte par la zone de languette (92), en particulier est ainsi radialement moins étendue que la zone de languette (92),
dans lequel la plage angulaire circonférentielle couverte par la zone de guidage à baïonnette (61) est plus petite que la plage angulaire circonférentielle couverte par l'évidement (60),
dans lequel la plage angulaire circonférentielle couverte par la zone de languette (92) est inférieure en valeur à la différence entre la plage angulaire circonférentielle couverte par l'évidement (60) et la plage angulaire circonférentielle couverte par la zone de guidage à baïonnette (61),
en particulier de telle sorte que la zone de languette (92) peut être introduite axialement dans l'évidement (60) et s'engage derrière la zone de guidage à baïonnette par rotation.

4. Entraînement selon au moins l'une des revendications précédentes,
**caractérisé en ce que**
la largeur axiale de la zone de guidage à baïonnette (61) augmente dans la direction circonférentielle,
en particulier
- de telle sorte que la zone de languette (92) formée sur la bride d'adaptation (43) est déplacée axialement lors de sa rotation dans la direction circonférentielle de la zone de guidage à baïonnette, en particulier de telle sorte que la position axiale est proportionnelle à la position angulaire de rotation de la zone de languette (92),
- et/ou de telle sorte que la bride d'adaptation (43) est pressée vers la partie carter (40) lors de la rotation par rapport à la partie carter (40) de la bride d'adaptation (43) dans la direction circonférentielle.

5. Entraînement selon au moins l'une des revendications précédentes,
**caractérisé en ce que**
dans un évidement (60) de la partie carter (40) est disposé un boulon (50) qui s'appuie sur la partie carter (40) et qui est pressé par un élément à ressort (51) en particulier axialement vers la bride d'adaptation (43), en particulier pour son blocage,
ou que
dans un évidement (60) de la partie carter (40) est disposé un boulon (50) qui s'appuie sur la bride d'adaptation (43) et qui est pressé par un élément à ressort (51) en particulier axialement vers la partie carter (40), en particulier pour son blocage.

6. Entraînement selon au moins l'une des revendications précédentes,
**caractérisé en ce que**
sur la bride d'adaptation (43) sont formées des zones de nervure (7, 90) faisant saillie axialement vers la partie carter (40), qui pénètrent chacune dans une rainure annulaire respective de la partie carter (40) et servent ainsi de guide lors du mouvement de rotation de la bride d'adaptation (43) par rapport à la partie carter (40),
dans lequel la plage de distance radiale couverte par la zone de nervure respective (7, 90) est indépendante de l'angle circonférentiel,
en particulier dans lequel la zone de nervure respective (7, 90) s'étend dans la direction circonférentielle,
en particulier dans lequel les zones de nervure sont disposées à la même distance radiale mais sont espacées les unes des autres dans la direction circonférentielle.

7. Entraînement selon au moins l'une des revendications précédentes,
**caractérisé en ce**
**qu'**un arbre, en particulier l'arbre d'entrée, de la transmission est monté par l'intermédiaire du palier (47) défini comme premier palier (47) et par l'intermédiaire d'un deuxième palier (47),
dans lequel le premier palier (47) est logé dans un logement de palier (4, 5, 6) formé sur la partie carter (40),
dans lequel le deuxième palier (47) est logé dans un logement de palier (4, 5, 6) formé sur la partie couvercle (1).

8. Entraînement selon au moins l'une des revendications précédentes,
**caractérisé en ce**
**qu'**entre le logement de palier respectif (4, 5, 6) et le palier respectif (47) est disposé un élément d'étanchéité respectif, en particulier un élément d'étanchéité en caoutchouc ou en élastomère, en particulier un joint torique, lequel est chaque fois déformé élastiquement de telle sorte que le palier respectif (47) est pressé par l'élément d'étanchéité respectif contre un gradin respectif de l'arbre,
en particulier de telle sorte que les paliers (47) de l'arbre sont serrés l'un contre l'autre.

9. Entraînement selon au moins l'une des revendications précédentes,
**caractérisé en ce que**
des zones de nervure (7, 90) formées sur la partie carter (40) et faisant saillie vers le palier (47) logé dans le logement de palier (4, 5, 6) de la partie carter (40) limitent la déformation élastique du joint (44, 46),
en particulier dans lequel les zones de nervure (7, 90) sont disposées chacune à la même distance radiale et/ou sont espacées les unes des autres dans la direction circonférentielle et/ou dans lequel les zones de nervure (7, 90) s'appliquent contre un palier respectif,
et/ou que
le joint déformé élastiquement (44, 46) est disposé au fond du logement de palier en forme de pot (4, 5, 6) entre le logement de palier (4, 5, 6) et le palier (47) qui y est logé, dans lequel des zones de nervure (7, 90) ou les zones de nervure (7, 90) contre lesquelles le palier (47) s'applique, font saillie axialement au fond du logement de palier (4, 5, 6), de telle sorte que la déformation du joint (44, 46) est limitée au moyen des zones de nervure (7, 90),
dans lequel le joint déformé élastiquement (44, 46) presse le palier (47) contre un gradin formé sur l'arbre,
en particulier dans lequel l'arbre est monté à rotation par rapport au logement de palier (4, 5, 6) au moyen du palier.

10. Entraînement selon au moins l'une des revendications précédentes,
**caractérisé en ce que**
des logements de palier (4, 5, 6), également en forme de pot, sont formés sur la partie couvercle (1),
dans lequel des ailettes de retenue (2) s'étendent à partir du logement de palier respectif (4, 5, 6) jusqu'à une zone de bord périphérique de la partie couvercle (1),
dans lequel des zones de nervure (7, 90) faisant saillie axialement sont formées sur le fond respectif du logement de palier en forme de pot (4, 5, 6), qui limitent la déformation élastique d'un joint respectif (44, 46),
en particulier dans lequel le joint respectif (44, 46) presse le palier respectif (47) sur un gradin respectif formée sur l'arbre respectif.

11. Entraînement selon au moins l'une des revendications précédentes,
**caractérisé en ce que**
la partie carter (40) présente les logements de palier (4, 5, 6), un siège de palier étant prévu dans chaque logement de palier (4, 5, 6),
en particulier dans lequel le siège de palier respectif est réalisé interrompu dans la direction circonférentielle,
dans lequel, sur le côté opposé au siège de palier, en particulier le côté extérieur, de la partie carter (40) sont formées des zones de surface d'appui (20) planes, en particulier en alignement les unes avec les autres,
en particulier, les zones de surface d'appui (20) sont donc prévues, en particulier disposées, dans un plan commun.

12. Entraînement selon au moins l'une des revendications précédentes,
**caractérisé en ce que**
la partie couvercle (1) présente des logements de palier (4, 5, 6), un siège de palier étant prévu dans chaque logement de palier (4, 5, 6),
en particulier dans lequel le siège de palier respectif est réalisé interrompu dans la direction circonférentielle,
dans lequel, sur le côté opposé au siège de palier, en particulier le côté extérieur, de la partie couvercle (1) sont formées des zones de surface d'appui (20) planes, en particulier en alignement les unes avec les autres,
en particulier, les zones de surface d'appui (20) sont donc prévues, en particulier disposées, dans un plan commun
et/ou que
un palier (47) est logé en ajustement exact dans le siège de palier respectif.

13. Procédé de fabrication d'un entraînement selon au moins l'une des revendications précédentes,
**caractérisé en ce que**,
dans une première étape du procédé, la partie carter (40) est fabriquée par moulage, dans une deuxième étape du procédé, un outil de poinçonnage est pressé dans des logements de palier (4, 5, 6) de la partie carter (40), de sorte que des logements de palier sont fabriqués en ajustement exact,
dans lequel l'outil de poinçonnage présente au moins deux poinçons, chacun des poinçons étant prévu pour former un siège de palier respectif,
dans lequel, dans une troisième étape du procédé, un palier respectif (47) est logé dans le logement de palier respectif.

14. Procédé selon la revendication 13,
**caractérisé en ce que**,
dans une première étape du procédé de fabrication, la partie couvercle (1) est fabriquée par moulage,
dans une deuxième étape du procédé de fabrication, un outil de poinçonnage est pressé dans des logements de palier (4, 5, 6) de la partie couvercle (1), de sorte que des sièges de palier sont fabriqués en ajustement exact,
en particulier dans lequel l'outil de poinçonnage présente au moins deux poinçons, chacun des poinçons étant prévu pour former un siège de palier respectif,
en particulier dans lequel, dans une troisième étape du procédé de fabrication, un palier respectif (47) est logé dans le logement de palier respectif.
